# EUROPEAN PATENT APPLICATION

(11) **EP 2 827 548 A1**
(43) Date of publication of application: **21.01.2015**
(21) Application number: 13306024.4
(22) Date of filing: 17.07.2013
(51) Int. Cl.: H04L 29/06

(54) **Filtering sensitive data out of a network**

(71) Applicant: ALCATEL LUCENT, 92100 Boulogne-Billancourt (FR)
(72) Inventor: Kawsar, Fahim, 2018 Antwerp (BE); Theeten, Bart Antoon Rika, 2018 Antwerp (BE)
(74) Representative: Mouney, Jérôme

(57) **Abstract**

For filtering messages that are received by a controlling node (CN) and are to be sent toward a destination device within a telecommunication network (TN), a controlling device receives a set of data from a terminal (UT) of a user, calculates a set of features (SF) of the set of data, and stores the calculated set of features (SF) in association with an identifier (IdU) of the user in a database (PD).

Then the controlling device receives data from the controlling node (CN), the data having been extracted from a message (Mes) intercepted by the controlling node (CN) after a deep packet inspection on the message, and calculates a set of features of the received data.

If the calculated set of features matches a set of features stored in the database (PD), a notification message (Not) is sent to the user whose identifier (IdU) is associated with the stored set of features, the notification message containing an information that a match was found for the set of data of the user.

## Description

### FIELD OF THE INVENTION

The present invention pertains to the control of sensitive data in telecommunication networks. More particularly, the invention relates to a system for filtering sensitive data that are sent and transported through a telecommunication network.

### BACKGROUND

With the ever increasing popularity of social media, privacy concerns are becoming more and more dramatic. Social networking services allow people to upload content (pictures, movies), making this content available to other people (friends). These friends can then comment and share this content further with their friends, and so on.

Now, with the proliferation of smartphones equipped with high-quality cameras, it has become very easy for "friends" to take pictures of you without your consent or without you being aware. When such pictures (or movies) get posted on social networks, a privacy-concern arises.

Some social networking sites allow people to tag a person's name on shared pictures, while others automatically tag people in content, based on face recognition software. The purpose of tagging is to enable easy retrieval of content when someone searches for a person's name.

In the specific case of Facebook™, the person being tagged gets notified of this action (via email if not opted out), but failure to notify could potentially lead to serious privacy violations. Moreover, even if the person being tagged is notified, the damage is already done. The picture is already available on the social network site, making it available for people to copy it and potentially distribute it around on other social media sites like e.g. Twitter™.

Some social network services, e.g. Facebook™, notify users when they have been specifically tagged in a picture or in a message. This approach has a number of limitations:
- It requires explicit interactions in the form of tagging to make someone aware of his/her presence in a content. Currently, there is no automatic way of tagging, and consequently if not explicitly tagged the content is publicly available without consent of individuals whose privacy might be compromised;
- Once a content is placed in a social network, it is already available for anyone to see or search with or without tagging. As such it is already late for a protective action if privacy compromise is detected;
- When a privacy violation is detected, the victim needs to contact the person who posted the content or the service provider and ask that person/service provider to take down the picture.

Thus, there is a need to filter sensitive data that are related to a user and that are transported through a telecommunication network.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for filtering messages that are received by a controlling node and are to be sent toward a destination device within a telecommunication network, comprising the following steps in a controlling device:
receiving a set of data from a terminal of a user,
calculating a set of features of the set of data,
storing the calculated set of features in association with an identifier (IdU) of the user in a database,
receiving data from the controlling node, the data having been extracted from a message intercepted by the controlling node after a deep packet inspection on the message,
calculating a set of features of the received data,
if the calculated set of features matches a set of features stored in the database, sending a notification message to the user whose identifier is associated with the stored set of features, the notification message containing an information that a match was found for the set of data of the user.

Advantageously, the invention provides a solution to prevent anyone to distribute pictures of another person (and by generalization, any content in which another person appears or that may contain privacy-sensitive information), if that other person has chosen (i.e. flagged) this to be a violation of his/her privacy rights. The solution installs privacy filters based on DPI (Deep Packet Inspection) at strategic places in the network, detecting privacy violations in messages containing explicit content, before that content even reaches the intended service, e.g. Facebook™. The user who is concerned with potential privacy violation can "train" the controlling device service to detect such violations. The actual technique is explained in the Basic Idea section below.

In an embodiment, the notification message contains information on the sender of the message and information on the destination device.

In an embodiment, the notification message contains a copy of the data whose set of features was matched.

In an embodiment, the delivery of the message is blocked if the calculated set of features matches a set of features stored in the database.

In an embodiment, the destination device is an application server hosting a social networking service.

In an embodiment, the set of data is under the form of one of an image file, an audio file, a video file or a text file.

In an embodiment, the set of data is received via multiple messages sent from the terminal of the user.

In an embodiment, the set of features is a digital fingerprint of the set of data.

In an embodiment, the set of data is under the form of image files, and the controlling device executes a face recognition function to detect the face of the user based on the image files, the set of features being calculated from the detected face of the user.

In an embodiment, the set of data is under the form of audio files, and the controlling device executes a voice recognition function to detect voice characteristics of the user based on the image files, the set of features being calculated from the detected voice characteristics of the user.

In an embodiment, the stored set of features is associated with a set of criteria that have to be matched before the calculation of the set of features of the received data.

In an embodiment, the set of criteria comprises at least one of the following: an address of the destination, an IP range of the destination, a hostname of the destination device, a service name or a type of website of the destination device; a geographic location of the sender of the message or of the destination device; a specific service provider and telecommunication network identity.

The invention also pertains to a device for a device for filtering messages that are received by a controlling node and are to be sent toward a destination device within a telecommunication network, the device comprising:
means for receiving a set of data from a terminal of a user,
means for calculating a set of features of the set of data,
means for storing the calculated set of features in association with an identifier of the user in a database,
means for receiving data from the controlling node, the data having been extracted from a message intercepted by the controlling node after a deep packet inspection on the message,
means for calculating a set of features of the received data,
means for sending a notification message to the user whose identifier is associated with the stored set of features, if the calculated set of features matches a set of features stored in the database, the notification message containing an information that a match was found for the set of data of the user.

The invention also pertains to a computer program capable of being implemented within a device, said program comprising instructions which, when the program is executed within said device, carry out steps according to the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for a network traffic inspection; and
- FIG. 2 is an algorithm of a method for filtering messages containing sensitive data out of a telecommunication network according to one embodiment of the invention.

The same reference number represents the same element or the same type of element on all drawings.

### DESCRIPTION OF EMBODIMENTS

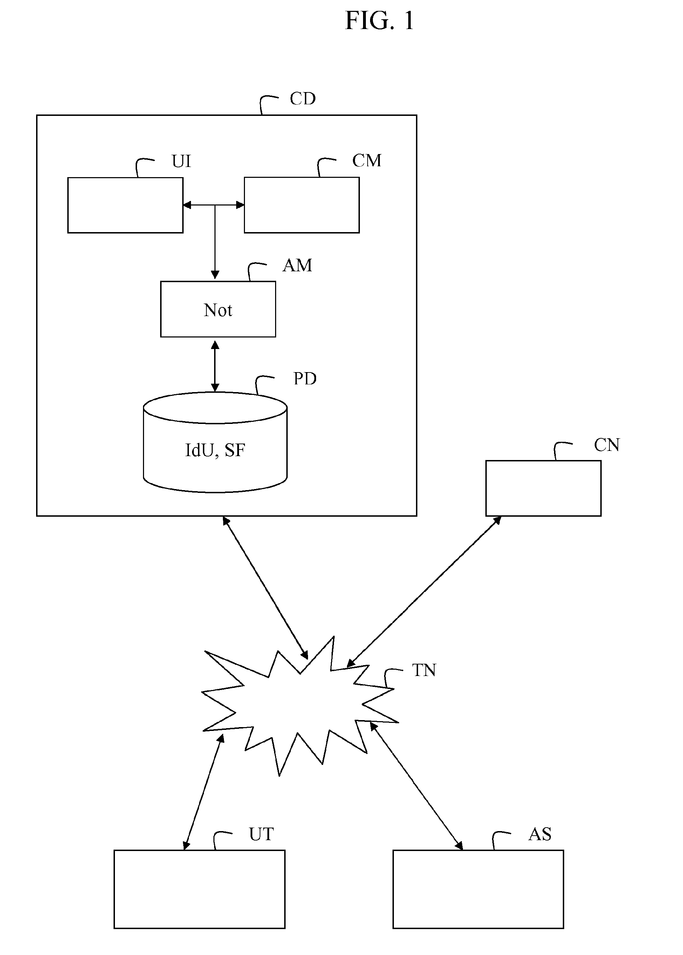

With reference to FIG. 1, a communication system according to the invention comprises a telecommunication network TN, a controlling device CD, a controlling node CN, an application server AS and at least a user terminal UT, able to communicate between them through the telecommunication network.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

As an introduction, a few terms and concepts that are helpful for understanding the invention are defined below.

A router is an information technology device in a communication network intended for routing data traffic. More particularly, the router controls the transmission of data traffic through the network and can determine the nearest network node to which a data packet should be sent so that the said packet will reach a predetermined target within the network as quickly as possible. For this purpose, the router has in its memory a routing table containing the shortest paths to other routers within the network as a function of metrics associated to such paths. In other words, a routing table is a table of matches between the network address of the targeted network location and the next node to which the router has to send the message.

The controlling node CN can be a backbone router, through which a lot of traffic passes. In another example, the controlling node CN can be a proxy or a reverse proxy, e.g. operated by a business/corporation respectively a service provider. The proxy would assure privacy sensitive information pertaining to the business/corporation would never be allowed to exit the confines of the business/corporation, while the reverse proxy would prevent privacy-sensitive information from entering the business/corporation/ social network.

The controlling node CN is able to perform a deep packet inspection, which allows for analyzing messages passing through the controlling node, for example to extract content from these messages.

The application server AS represents the part of the business/corporation/social network platform, that can be accessed via a user terminal UT, connected to the telecommunication network. For instance, the application server AS stores data sent and posted by users in a social network website from their user terminals UT.

For example, the user terminal UT can be a mobile phone, a computer and a variety of other user equipments for communication.

The controlling device CD is a device that is associated with the controlling node CN and that is in charge of filtering out data related to registered users.

In one embodiment, the controlling device CD is placed between the controlling node CN and the application server AS that can be any node in the telecommunication network.

In another embodiment, the controlling device CD may be included in the controlling node CN from which the network traffic comes.

The controlling device CD comprises optionally an user interface UI, a communication module CM, an analysis module AM and a privacy database PD.

The user interface UI is a front-end portal which can be accessed by user terminal UT in order to configure the controlling device.

The communication module CM is a network interface able to communicate with the controlling node CN and with user terminals through the telecommunication network TN.

The communication module CM is adapted to receive one or more messages sent from a user terminal, containing information about a privacy-sensitive content the user would wish to filter out of the telecommunication network.

If the received message contains a set of sensitive data to be filtered out because of privacy reasons, the analysis module AM calculates a set of features SF of the given set of sensitive data and stores this set of features into the privacy database PD, along with an identifier IdU of the user, such as contact information, to be able to let the user know via a notification message Not that a match was found in the telecommunication network.

In case the given set of sensitive data correspond to a specific image, the set of features could be a digital fingerprint of the image.

It is assumed that a fingerprinting algorithm is a procedure that maps an arbitrarily large data item (such as a computer file) to a shorter bit string, called a digital fingerprint, that uniquely identifies the original data.

Similarly, if the user wishes to filter any picture featuring him/herself, the user can send multiple messages featuring images of him/herself to the controlling device CD via the user interface UI so that the analysis module AM triggers a face recognition function to detect the face of the user based on the analysis of the multiple images. The results of the training are stored in the privacy database PD as a set of features characterizing the face of the user based on the sent multiple messages. In this case, the set of features uniquely identify the face of the user, i.e. a specific portion of the set of sensitive data.

The sensitive data can be of any type, being for example under the form of an image file, an audio file, a video file or a text file.

Other feature-extracting functions could be triggered instead of or be added to the face recognition function that is dedicated to a case wherein the sensitive data comprises an image file. In one example, voice recognition can be triggered in case wherein the sensitive data comprises an audio file. In another example, a text parser can be triggered in case wherein the sensitive data comprises a text file.

In all cases, the set of features SF permits to uniquely identify the set of sensitive data or a specific portion of the set of sensitive data.

The controlling device CD is linked to a privacy database PD, which is integrated into that controlling device CD or incorporated into a database management server linked to the controlling device CD by a local or remote link. The privacy database PD comprises lookup tables comprising identifiers IdU of users respectively associated with set of features SF of sensitive data.

The analysis module AM has a function of filtering messages containing data whose calculated set of features can be matched with a set of features stored in the privacy database PD.

Optionally, the user can specify a number of criteria that should be matched before the filter is actually applied. Such criteria could be (but are not limited to): the IP address of the destination, an IP range of the destination, a hostname of the destination, a service name or a type of website of the destination; a geographic location of the origin or destination of messages; a specific service provider or network identity.

In the privacy database, each set of features can be stored further in correspondence with a set of criteria as described above.

During normal operation, the controlling node CN receives messages from users intended for delivery to some destination, like the application server hosting a social networking service. Upon receipt of the message, the controlling node CN launches a DPI function that analyzes the message and passes it to controlling device CD for analysis of whether or not the message is subject to privacy filtering.

In case of an image included in the message, the analysis module AM calculates the set of features of the image and looks up this set of features in the privacy database PD. If there is a match, the corresponding identifier IdU is retrieved to send a notification message Not to the user who has indicated that the related content is privacy-sensitive and should be filtered out.

The analysis and filter carried out by the analysis module AM can happen in real-time. In this case, the result of analysis by the analysis module AM is awaited before, in case of negative match, delivering the message to its intended destination, like the application server. In case of positive match, the message is blocked and an error response is sent back to the original sender.

In case the analysis is not carried out in real-time, the analysis is performed in parallel to the delivery of the message to its intended destination. Once the analysis is done, a positive match will result in a notification message being sent to the user who had flagged this content to be a violation of his/her privacy previously via the user interface UI. The notification message Not contains information on the sender of the message as well as information on the destination of this message, like an identifier of the application server.

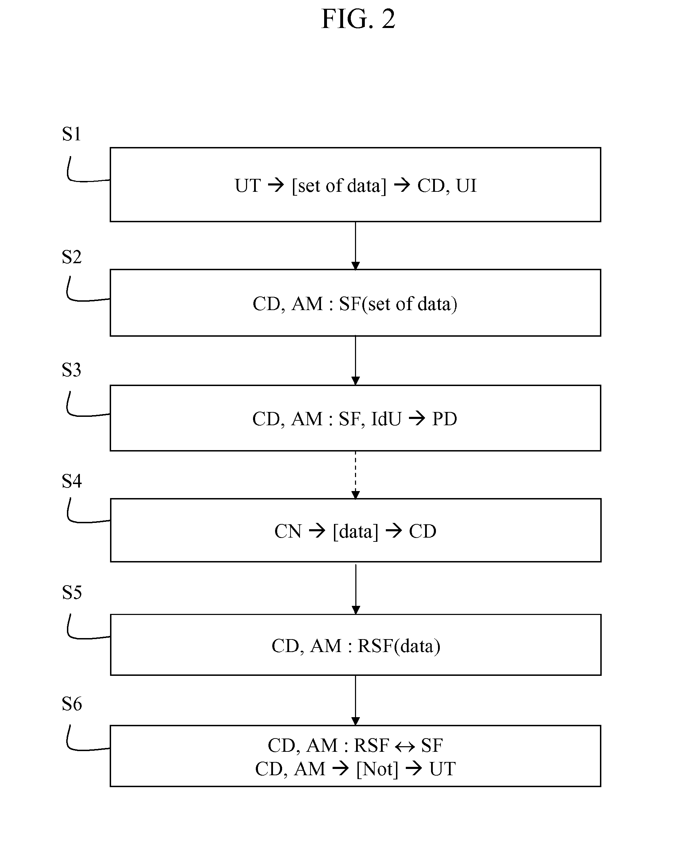

With reference to FIG. 2, a method for filtering messages containing sensitive data out of a telecommunication network according to one embodiment of the invention comprises steps S1 to S6 executed within the communication system.

In step S1, the controlling device CD receives a set of data from a user terminal UT via the user interface UI.

The data can be under the form of an image file, an audio file, a video file or a text file. The data can be sent through multiple messages.

In step S2, the analysis module AM calculates a set of features SF of the set of data.

In case wherein the set of data is an image, the set of features is a digital fingerprint of the image.

In case wherein the set of data was sent through multiple messages, the data being for example under the form of image files or an audio files, the analysis module AM triggers a face recognition function to detect the face of the user based on the analysis of the multiple images or triggers a voice recognition function to detect voice characteristics of the user based on the analysis of the multiple samples of the audio files.

In step S3, the analysis module AM stores the set of features SF in association with an identifier IdU of the user in the privacy database PD.

The identifier IdU of the user can be provided by the user, or deducted from characteristics of the user terminal.

In step S4, the communication module CM of the controlling device CD receives data from the controlling node CN, after this latter has executed a deep packet inspection on an intercepted message in order to extract the data from the message.

The controlling node CN can intercept each of the messages that are routed to it, or intercept only a part of the messages.

In step S5, the analysis module AM calculates a set of features RSF of the received data.

In step S6, the analysis module AM compares the calculated set of features RSF with set of features SF stored in the privacy database PD.

If the calculated set of features RSF matches a stored set of features SF, the analysis module AM sends a notification message Not to the user, by means of the identifier IdU of the user associated with the stored set of features. The notification message Not containing at least an information that a match was found for the set of data of the user. For example, the notification message is sent to the terminal UT of the user.

Additionally, the notification message Not may contain information on the sender of the message as well as information on the destination of the message Mes. Optionally the notification message Not may contain further a copy of the content that was matched.

Additionally, the analysis module AM can block the delivery of the message Mes.

In a first example, a user uploads a specific picture it wants to be taken down, to the controlling device via the user interface. The controlling device generates a digital fingerprint as a set of features of the picture and stores this digital fingerprint in the privacy database. Whenever content travels through a controlling node with the controlling device functions installed on top of the DPI capabilities of that controlling device, the digital fingerprint of that content is matched against the privacy database. A positive match results in the message not being let through the controlling device. The user is notified of the IP address of the sender of this privacy-violating content and the sender is notified of the error condition.

In a second example, the user trains the device to detect his/her face in multi-media content. Similarly as in the first example, a digital representation of the user's face is generated by a face-recognition service and stored in the privacy database as a set of features. In contrast to the first example, face recognition exhibits non real-time characteristics. Whenever content passes through a controlling node with the controlling device functions installed on top of its DPI capabilities, the face recognition algorithm is run asynchronously. When there is a positive match with the privacy database, both the sender and the user are notified of this violation. As face recognition is a "non real-time" service, the message is let through towards its destination, but the user is given enough information to know who sent the content and where the content was sent to. Specifically for the case of face recognition, the user receives a report of the appearance of that user in content, along with who sent the message and where the message was sent to, optionally with a copy of the content that was matched, so that the user can judge whether this content is indeed in violation of his/her privacy or not.

The invention described here relates to a method and a device for filtering messages containing sensitive data out of a telecommunication network. According to one implementation of the invention, the steps of the invention are determined by the instructions of a computer program incorporated into a device, such as the controlling device. The program comprises program instructions which, when said program is loaded and executed within the device, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for filtering messages that are received by a controlling node (CN) and are to be sent toward a destination device within a telecommunication network (TN), comprising the following steps in a controlling device (CD):
receiving (S1) a set of data from a terminal (UT) of a user,
calculating (S2) a set of features (SF) of the set of data,
storing (S3) the calculated set of features (SF) in association with an identifier (IdU) of the user in a database (PD),
receiving (S4) data from the controlling node (CN), the data having been extracted from a message (Mes) intercepted by the controlling node (CN) after a deep packet inspection on the message,
calculating (S5) a set of features (RSF) of the received data,
if the calculated set of features (RSF) matches a set of features (SF) stored in the database (PD), sending a notification message (Not) to the user whose identifier (IdU) is associated with the stored set of features, the notification message (Not) containing an information that a match was found for the set of data of the user.

2. A method according to claim 1, whereby the notification message (Not) contains information on the sender of the message (Mes) and information on the destination device.

3. A method according to claim 1 or 2, whereby the notification message (Not) contains a copy of the data whose set of features was matched.

4. A method according to any of claims 1 to 3, whereby the delivery of the message (Mes) is blocked if the calculated set of features matches a set of features stored in the database (PD).

5. A method according to any of claims 1 to 4, whereby the destination device is an application server hosting a social networking service.

6. A method according to any of claims 1 to 5, whereby the set of data is under the form of one of an image file, an audio file, a video file or a text file.

7. A method according to any of claims 1 to 6, whereby the set of data is received via multiple messages sent from the terminal (UT) of the user.

8. A method according to claim 7, whereby the set of features (SF) is a digital fingerprint of the set of data.

9. A method according to claim 7, whereby the set of data is under the form of image files, and the controlling device executes a face recognition function to detect the face of the user based on the image files, the set of features being calculated from the detected face of the user.

10. A method according to claim 7, whereby the set of data is under the form of audio files, and the controlling device executes a voice recognition function to detect voice characteristics of the user based on the image files, the set of features being calculated from the detected voice characteristics of the user.

11. A method according to any of claims 1 to 10, whereby the stored set of features is associated with a set of criteria that have to be matched before the calculation of the set of features of the received data.

12. A method according to claim 10, whereby the set of criteria comprises at least one of the following: an address of the destination, an IP range of the destination, a hostname of the destination device, a service name or a type of website of the destination device; a geographic location of the sender of the message (Mes) or of the destination device; a specific service provider and telecommunication network identity.

13. A device (CD) for filtering messages that are received by a controlling node (CN) and are to be sent toward a destination device within a telecommunication network (TN), the device comprising:
means (UI) for receiving a set of data from a terminal (UT) of a user,
means (AM) for calculating a set of features (SF) of the set of data,
means (AM) for storing the calculated set of features (SF) in association with an identifier (IdU) of the user in a database (PD),
means (CM) for receiving data from the controlling node (CN), the data having been extracted from a message (Mes) intercepted by the controlling node (CN) after a deep packet inspection on the message,
means (AM) for calculating a set of features (RSF) of the received data,
means (AM) for sending a notification message (Not) to the user whose identifier (IdU) is associated with the stored set of features, if the calculated set of features (RSF) matches a set of features (SF) stored in the database (PD), the notification message (Not) containing an information that a match was found for the set of data of the user.

14. A computer program capable of being implemented within a device (CD) for filtering messages that are received by a controlling node (CN) and are to be sent toward a destination device within a telecommunication network (TN), said program comprising instructions which, when the program is loaded and executed within said device, carry out the following steps:
receiving (S1) a set of data from a terminal (UT) of a user,
calculating (S2) a set of features (SF) of the set of data,
storing (S3) the calculated set of features (SF) in association with an identifier (IdU) of the user in a database (PD),
receiving (S4) data from the controlling node (CN), the data having been extracted from a message (Mes) intercepted by the controlling node (CN) after a deep packet inspection on the message,
calculating (S5) a set of features (RSF) of the received data,
if the calculated set of features (RSF) matches a set of features (SF) stored in the database (PD), sending a notification message (Not) to the user whose identifier (IdU) is associated with the stored set of features, the notification message (Not) containing an information that a match was found for the set of data of the user.
